# EUROPÄISCHE PATENTSCHRIFT

(11) **EP 4 263 100 B1**
(45) Veröffentlichungstag und Bekanntmachung des Hinweises auf die Patenterteilung: **18.09.2024**
(21) Anmeldenummer: 21839338.7
(22) Anmeldetag: 07.12.2021
(51) Int. Cl.: B23F 23/10, B23F 23/12, G01M 1/36, B23B 31/40, B23B 23/00, G01M 3/22

(54) **WERKZEUGKOPF MIT WUCHTEINRICHTUNGEN UND SPANNELEMENT, SOWIE WERKZEUGMASCHINE MIT EINEM DERARTIGEN WERKZEUGKOPF**
TOOL HEAD COMPRISING BALANCING DEVICES AND A CLAMPING ELEMENT, AND MACHINE TOOL COMPRISING SUCH A TOOL HEAD
TÊTE D'OUTIL COMPRENANT DES DISPOSITIFS D'ÉQUILIBRAGE ET UN ÉLÉMENT DE SERRAGE, ET MACHINE-OUTIL COMPRENANT UNE TELLE TÊTE D'OUTIL

(30) Priorität: 18.12.2020 CH 16232020
(43) Veröffentlichungstag der Anmeldung: 25.10.2023
(73) Patentinhaber: Reishauer AG, 8304 Wallisellen (CH)
(72) Erfinder: HALTER, Adrian Marcel, 8304 Wallisellen (CH); HUG, Theophil, 8360 Wallenwil (CH); MÜLLER, Michel, 8610 Uster (CH)
(74) Vertreter: Detken, Andreas
(86) Internationale Anmeldenummer: PCT/EP2021/084605
(87) Internationale Veröffentlichungsnummer: WO 2022/128635

(56) Entgegenhaltungen:
- EP-A1- 2 712 694
- EP-A1- 3 153 277
- EP-A1- 3 363 573
- EP-A1- 3 388 179
- DE-B- 1 179 787
- FR-A- 1 448 597
- JP-A- S60 146 622
- US-B1- 6 257 963

## Beschreibung

### TECHNISCHES GEBIET

Die vorliegende Erfindung betrifft einen Werkzeugkopf gemäß dem Oberbegriff des Anspruchs 1, der aus dem Dokument EP3153277A1 bekannt ist.

Die vorliegende Erfindung betrifft ausserdem eine Werkzeugmaschine mit einem solchen Werkzeugkopf.

### STAND DER TECHNIK

In vielen Werkzeugmaschinen kommen rotierende Werkzeuge zum Einsatz. Um hochwertige Bearbeitungsergebnisse zu erzielen, ist es erforderlich, die Werkzeuge auszuwuchten, d.h., Unwuchten zu beseitigen. Dies gilt in besonderem Masse in Verzahnmaschinen, d.h. in Maschinen zur Bearbeitung von Verzahnungen.

Von einer Unwucht spricht man bei einem rotierenden Körper, wenn die Rotationsachse des Körpers nicht einer seiner Hauptträgheitsachsen entspricht. Man unterscheidet zwischen statischer und dynamischer Unwucht. Meist treten beide Formen gleichzeitig auf. Eine statische Unwucht entsteht, wenn die Drehachse nicht durch den Schwerpunkt des Rotationskörpers verläuft. Eine statische Unwucht erzeugt bei einer Drehung des Körpers eine kreisförmige Bewegung von dessen Schwerpunkt. Dynamische Unwuchten entstehen, wenn die Rotationsachse im Schwerpunkt gegenüber den Hauptträgheitsachsen gekippt ist. Dynamische Unwuchten rufen an den Enden der Achse um 180° verschobene, kreisförmige Schwingungen hervor. Der Schwerpunkt des rotierenden Körpers bleibt in Ruhelage, während die Achse wegen der entgegengesetzten Kreisbewegungen taumelt. Wenn die Achse durch Lager fixiert ist, kommt es zu einer entsprechenden Belastung der Lager.

Unwuchten am Werkzeug führen bei der Werkstückbearbeitung zu einer verringerten Fertigungsgenauigkeit, zu einer schlechteren Oberflächenqualität und zu einer schnelleren Abnutzung des Werkzeugs. Ausserdem können Lagerschäden auftreten. Ziel des Auswuchtens ist es, Schwingungen des Werkzeugs und Lagerkräfte auf akzeptable Werte zu begrenzen.

Besondere Herausforderungen ergeben sich, wenn Werkzeuge mit kleinem Durchmesser ausgewuchtet werden sollen. Insbesondere in der Verzahnungsfertigung kommen zunehmend Werkzeuge mit kleinem Durchmesser zum Einsatz. Um die gewünschte Schnittgeschwindigkeit zu erreichen, werden solche Werkzeuge meist bei relativ hohen Drehzahlen betrieben. Da die Unwuchtkräfte proportional zum Quadrat der Drehzahl ansteigen, können sehr hohe Unwuchtkräfte auftreten. Gleichzeitig sind solche Werkzeuge häufig im Verhältnis zu ihrem Durchmesser relativ lang. Dadurch wirken sich Biegemomente, die durch eine dynamische Unwucht verursacht werden, besonders stark aus.

Aus dem Stand der Technik ist es bekannt, Unwuchten an rotierenden Werkzeugen durch geeignete Wuchteinrichtungen zu minimieren. Wuchteinrichtungen werden häufig im Inneren des Werkzeugs angeordnet, wie das in der Fig. 1 von EP3153277A1 dargestellt ist. Allerdings stösst eine solche Anordnung an Grenzen, wenn Werkzeuge mit kleinem Durchmesser eingesetzt werden sollen. Der verfügbare Platz im Inneren des Werkzeugs reicht dann häufig nicht mehr aus, um eine genügend leistungsfähige Wuchteinrichtung einzubauen.

Zur Lösung dieses Problems schlägt EP3153277A1 vor, das Werkzeug zwischen einer Motorspindel und einer antriebslosen Gegenspindel aufzunehmen und die Wuchteinrichtungen in den Wellen der Motorspindel und der Gegenspindel zu integrieren. An dieser Lösung ist nachteilig, dass die Wuchteinrichtungen verhältnismässig weit vom Werkzeug und von den werkzeugnahen Lagerstellen der Motorspindel und der Gegenspindel entfernt sind. Auch steht in den Wellen der Motorspindel und der Gegenspindel häufig nicht genügend Platz zum Einbau eines leistungsfähigen Wuchtsystems zur Verfügung.

### DARSTELLUNG DER ERFINDUNG

Es ist eine Aufgabe der vorliegenden Erfindung, einen Werkzeugkopf anzugeben, der auch für Werkzeuge mit kleinem Durchmesser einsetzbar ist und ein effizientes Auswuchten solcher Werkzeuge ermöglicht.

Diese Aufgabe wird durch einen Werkzeugkopf nach Anspruch 1 gelöst. Weitere Ausführungsformen sind in den abhängigen Ansprüchen angegeben.

Es wird also ein Werkzeugkopf für eine Werkzeugmaschine, insbesondere für eine Verzahnmaschine, angegeben. Der Werkzeugkopf weist auf:
eine erste Spindeleinheit mit einer ersten Spindelwelle, die in der ersten Spindeleinheit um eine Werkzeugspindelachse drehbar gelagert ist;
eine erste Wuchteinrichtung, die der ersten Spindeleinheit zugeordnet ist;
eine zweite Spindeleinheit mit einer zweiten Spindelwelle, die in der zweiten Spindeleinheit um die Werkzeugspindelachse drehbar gelagert ist;
eine zweite Wuchteinrichtung, die der zweiten Spindeleinheit zugeordnet ist.

Die erste Spindeleinheit und die zweite Spindeleinheit sind derart koaxial zueinander angeordnet, dass ein Werkzeug axial zwischen der ersten Spindelwelle und der zweiten Spindelwelle aufnehmbar ist. Erfindungsgemäss umgibt die erste Wuchteinrichtung die erste Spindelwelle radial und ist axial zwischen einem werkzeugseitigen Spindellager der ersten Spindeleinheit und einem werkzeugseitigen Ende der ersten Spindelwelle angeordnet, und/oder die zweite Wuchteinrichtung umgibt die zweite Spindelwelle radial und ist axial zwischen einem werkzeugseitigen Spindellager der zweiten Spindeleinheit und einem werkzeugseitigen Ende der zweiten Spindelwelle angeordnet.

Wenn zwischen der ersten Spindelwelle und der zweiten Spindelwelle ein Werkzeug aufgenommen ist, ist die erste und/oder zweite Wuchteinrichtung also ausserhalb der jeweiligen Spindelwelle axial zwischen einem werkzeugseitigen Spindellager der zugeordneten Spindeleinheit und dem Werkzeug angeordnet. Durch die vorgeschlagene Anordnung wird es möglich, auch Werkzeuge mit kleinem Durchmesser effizient auszuwuchten. Indem mindestens eine der Wuchteinrichtungen um die Spindelwellen herum angeordnet ist, bevorzugt beide Wuchteinrichtungen, steht wesentlich mehr Platz für die Wuchtelemente zur Verfügung, als wenn beide Wuchteinrichtungen innerhalb des Werkzeugs oder innerhalb der Spindelwellen angeordnet sind. Dadurch können auch verhältnismässig grosse Unwuchten korrigiert werden. Durch die Anordnung der entsprechenden Wuchteinrichtung axial zwischen einem werkzeugseitigen Spindellager und dem Werkzeug erfolgt das Auswuchten mit dieser Wuchteinrichtung sowohl nahe beim Werkzeug als auch nahe bei den entsprechenden Lagerstellen. Dadurch wird ein sehr präzises Auswuchten möglich.

Die jeweilige Spindeleinheit wird häufig mehr als ein einziges Spindellager aufweisen. Unter einem "werkzeugseitigen Spindellager" ist dann dasjenige Spindellager zu verstehen, das innerhalb der betreffenden Spindeleinheit entlang der Werkzeugspindelachse am nächsten zum Werkzeug angeordnet ist.

Insbesondere kann folgende Anordnung der Wuchtebenen relativ zu den Lagerebenen der beiden Spindeleinheiten vorliegen: Das werkzeugseitige erste Spindellager definiert eine erste Lagerebene senkrecht zur Werkzeugspindelachse, und das werkzeugseitige zweite Spindellager definiert eine zweite Lagerebene senkrecht zur Werkzeugspindelachse. Die erste Wuchteinrichtung definiert eine erste Wuchtebene senkrecht zur Werkzeugspindelachse, und die zweite Wuchteinrichtung eine zweite Wuchtebene senkrecht zur Werkzeugspindelachse. Es ist dann bevorzugt, wenn die erste Wuchtebene zwischen der ersten Lagerebene und der zweiten Wuchtebene (insbesondere näher bei der ersten Lagerebene als bei der zweiten Wuchtebene) und/oder die zweite Wuchtebene zwischen der zweiten Lagerebene und der ersten Wuchtebene (insbesondere näher bei der zweiten Lagerebene als bei der ersten Wuchtebene) angeordnet ist.

Wenn ein Werkzeug zwischen den beiden Spindelwellen aufgenommen ist, definiert das Werkzeug eine Schwerpunktebene senkrecht zur Werkzeugspindelachse, die den Schwerpunkt des Werkzeugs enthält. Die erste Wuchtebene liegt dann vorzugsweise zwischen der ersten Lagerebene und der Schwerpunktebene, und/oder die zweite Wuchtebene liegt vorzugsweise zwischen der zweiten Lagerebene und der Schwerpunktebene. Dabei ist es bevorzugt, wenn die jeweilige Wuchtebene näher bei der entsprechenden Lagerebene als bei der Schwerpunktebene liegt.

Durch diese Anordnung der Wuchtebenen wird ein effizientes Zwei-Ebenen-Auswuchten ermöglicht.

In bevorzugten Ausführungsformen ist die erste Wuchteinrichtung und/oder die zweite Wuchteinrichtung als Ringwuchtsystem ausgebildet. Ringwuchtsysteme sind aus dem Stand der Technik seit langem bekannt (siehe z.B. DE4337001A1, US5757662A) und ermöglichen ein sehr präzises automatisches Auswuchten, ohne dass die Drehung der Spindeln gestoppt werden muss. Sie sind auf dem Markt in verschiedenen Ausführungen erhältlich. Stattdessen kann aber auch eine andere Art von Wuchtsystem, z.B. ein Wuchtsystem mit elektromotorisch bewegbaren Wuchtgewichten oder ein Hydrowuchtsystem, eingesetzt werden.

Die Wuchteinrichtungen können dazu ausgebildet sein, NC-gesteuert zu arbeiten. Dazu kann die erste und/oder zweite Wuchteinrichtung mindestens einen Aktor aufweisen, um eine Korrekturunwucht der betreffenden Wuchteinrichtung NC-gesteuert zu verstellen.

Am Werkzeugkopf kann mindestens ein Schwingungssensor zur Erfassung von Schwingungen, die durch eine Unwucht hervorgerufen werden, vorgesehen sein. Dieser Sensor kann in eine der Wuchteinrichtungen integriert sein oder separat ausgebildet sein. Dem Werkzeugkopf kann zudem eine Steuereinrichtung zugeordnet sein, die dazu ausgebildet ist, Signale von dem mindestens einen Schwingungssensor zu erfassen und die Aktoren in der ersten und/oder zweiten Wuchteinrichtung anzusteuern, um Korrekturunwuchten in der ersten und/oder zweiten Wuchteinrichtung in Abhängigkeit von den erfassten Signalen zu verstellen. Diese Verstellung kann automatisiert derart erfolgen, dass die Unwucht verringert wird. Bevorzugt ist die Steuereinrichtung dazu ausgebildet, ein automatisches Zwei-Ebenen-Wuchten durchzuführen. Entsprechende Algorithmen sind aus dem Stand der Technik hinlänglich bekannt. Die Steuereinrichtung kann Teil einer Maschinensteuerung sein oder eine separate Einheit sein.

Die erste und/oder zweite Wuchteinrichtung ist vorzugweise ausserhalb des Gehäuses der jeweiligen Spindeleinheit angeordnet. Insbesondere kann die erste Spindeleinheit ein erstes Gehäuse und die zweite Spindeleinheit ein zweites Gehäuse aufweisen. Die erste und/oder zweite Wuchteinrichtung ist dann vorzugsweise ausserhalb des ersten und zweiten Gehäuses angeordnet. Alternativ können die ersten und zweiten Spindeleinheiten ein gemeinsames Spindelgehäuse aufweisen, und die erste und/oder zweite Wuchteinrichtung ist dann vorzugsweise ausserhalb des gemeinsamen Spindelgehäuses angeordnet.

Insbesondere ist die erste Wuchteinrichtung vorzugsweise axial zwischen dem die erste Spindeleinheit umschliessenden (ersten oder gemeinsamen) Spindelgehäuse und dem Werkzeug angeordnet, und die zweite Wuchteinrichtung ist axial zwischen dem die zweite Spindeleinheit umschliessenden (zweiten oder gemeinsamen) Spindelgehäuse und dem Werkzeug angeordnet, wenn das Werkzeug zwischen der ersten Spindelwelle und der zweiten Spindelwelle aufgenommen ist.

Die Aussenkonturen der Wuchteinrichtungen sind vorzugsweise derart optimiert, dass die Störkontur bei der Bearbeitung von Werkstücken auf einer Werkstückspindel der Maschine minimiert wird. Konkret ist es von Vorteil, wenn die erste und/oder zweite Wuchteinrichtung eine Aussenkontur aufweist, die sich in Richtung des Werkzeugs verjüngt.

Ein erheblich verbessertes Auswuchtergebnis kann erreicht werden, wenn die beiden Spindelwellen axial mit dem Werkzeug verspannt werden, so dass beidseitig eine axiale Druckkraft auf das Werkzeug wirkt. Dazu ist die folgende Konstruktion besonders vorteilhaft: Die zweite Spindelwelle weist mindestens eine axiale Bohrung auf. Der Werkzeugkopf weist entsprechend mindestens eine Zugstange auf, die sich durch die entsprechende axiale Bohrung der zweiten Spindelwelle hindurch erstreckt, wobei die Zugstange an einem ersten Ende mit der ersten Spindelwelle verbindbar ist. Die Zugstange ist an ihrem zweiten Ende derart mit der zweiten Spindelwelle verbindbar, dass zwischen der ersten Spindelwelle und der zweiten Spindelwelle eine axiale Druckkraft auf das Werkzeug erzeugbar ist. Dazu weist das Werkzeug entsprechend ebenfalls mindestens eine axiale Bohrung auf, so dass die jeweilige Zugstange durch die entsprechende Bohrung des Werkzeugs hindurchgeführt werden kann.

Durch diese Art der axialen Verspannung entsteht eine Einheit aus den beiden Spindelwellen und dem Werkzeug, die in besonderem Masse torsions- und biegesteif ist. Die Kombination aus Zugstange und Spannelement ermöglicht dabei eine hohe axiale Druckkraft zwischen dem Werkzeug und den beiden Spindelwellen. Im Ergebnis wirkt die genannte Einheit wie eine einzige Welle. Gleichzeitig kann die genannte Konstruktion sehr kompakt ausgeführt werden. Dadurch eignet sich diese Konstruktion besonders für Werkzeuge mit einem kleinen Durchmesser.

Die genannte Konstruktion ist auch dann von Vorteil, wenn keine Wuchteinrichtungen vorhanden sind oder die Wuchteinrichtungen anders als vorstehend beschrieben ausgebildet sind. Insofern wird auch ein Werkzeugkopf für eine Werkzeugmaschine offenbart, insbesondere für eine Verzahnmaschine, das jedoch unter den Schutzbereich der Ansprüche dieses Patents nicht fällt, aufweisend:
eine erste Spindeleinheit mit einer ersten Spindelwelle, die in der ersten Spindeleinheit um eine Werkzeugspindelachse drehbar gelagert ist; und
eine zweite Spindeleinheit mit einer zweiten Spindelwelle, die in der zweiten Spindeleinheit um die Werkzeugspindelachse drehbar gelagert ist,
wobei die erste Spindeleinheit und die zweite Spindeleinheit so angeordnet sind, dass ein Werkzeug axial zwischen der ersten Spindelwelle und der zweiten Spindelwelle aufnehmbar ist, um das Werkzeug zu einer Drehung um die Werkzeugspindelachse anzutreiben,
wobei die zweite Spindelwelle mindestens eine axiale Bohrung aufweist,
wobei der Werkzeugkopf mindestens eine Zugstange aufweist, die sich durch die axiale Bohrung der zweiten Spindelwelle hindurch erstreckt,
wobei die Zugstange an einem ersten Ende mit der ersten Spindelwelle verbindbar ist, und
wobei die Zugstange an ihrem anderen Ende derart mit der zweiten Spindelwelle verbindbar ist, dass zwischen der ersten Spindelwelle und der zweiten Spindelwelle eine axiale Druckkraft auf das Werkzeug erzeugbar ist.

Dabei ist es von Vorteil, wenn die erste Spindeleinheit mindestens ein erstes Spindellager aufweist, wobei die erste Spindelwelle in dem ersten Spindellager um die Werkzeugspindelachse drehbar gelagert ist, und wobei das erste Spindellager dazu ausgebildet ist, sowohl Radial- als auch Axialkräfte aufzunehmen, und wenn die zweite Spindeleinheit entsprechend ein zweites Spindellager aufweist, wobei die zweite Spindelwelle in dem zweiten Spindellager um die Werkzeugspindelachse drehbar gelagert ist, und wobei das zweite Spindellager dazu ausgebildet ist, sowohl Radial- als auch Axialkräfte aufzunehmen.

Bevorzugt ist genau eine Zugstange vorhanden, die sich durch eine zentrale axiale Bohrung in der zweiten Spindelwelle hindurch erstreckt. Dementsprechend ist es bevorzugt, wenn auch das Werkzeug eine zentrale axiale Bohrung aufweist, durch die die Zugstange hindurchgeführt werden kann.

In einer besonders einfachen Ausführung ist die Zugstange mit der ersten Spindelwelle verbindbar, indem sie axial in die erste Spindelwelle eingeschraubt wird. Dazu können an dem entsprechenden Ende der Zugstange und an der ersten Spindelwelle zueinander komplementäre Gewinde (Innen- und Aussengewinde) ausgebildet sein. Es sind aber auch andere Verbindungsarten denkbar, z.B. eine bajonettartige Verbindung. Die Zugstange kann sich auch durch eine axiale Bohrung der ersten Spindelwelle hindurch erstrecken und an ihrem Ende z.B. mit einer Mutter versehen sein, die die erste Spindelwelle in Richtung des Werkzeugs zieht.

Die Zugstange kann vorteilhaft an ihrem anderen, freien Ende mit einem Spannelement versehen sein, das eine ringförmige Auflagefläche bildet, wobei die ringförmige Auflagefläche nach der Verbindung der Zugstrange mit der ersten Spindelwelle an der zweiten Spindelwelle anliegt und eine axiale Druckkraft auf die zweite Spindelwelle erzeugt, um diese in Richtung der ersten Spindelwelle zu drücken. Im einfachsten Fall kann die Zugstange dazu z.B. als Schraube mit einem Schraubenkopf ausgebildet sein. Die Schraube kann dann in die erste Spindelwelle einschraubbar sein, und der Schraubenkopf kann das Spannelement bilden. Die axiale Spannkraft wird dann ganz einfach durch Anziehen der Schraube erzeugt.

In einer anderen, ebenfalls sehr einfachen Ausführungsform ist die Zugstange an ihrem freien Ende mit einem Aussengewinde versehen, auf das eine Mutter aufschraubbar ist. In diesem Fall bildet die Mutter das Spannelement, und die axiale Druckkraft wird ganz einfach durch Anziehen der Mutter erzeugt.

Bevorzugt weist der Werkzeugkopf jedoch ein Spannelement auf, das lösbar mit der Zugstange verbindbar ist und eine Druckkraft erzeugt, die vorzugsweise rein axial wirkt, ohne dass ein Anziehen des Spannelements eine Drehmomentkomponente um die Werkzeugspindelachse erzeugt. Das Spannelement weist dazu ein Basiselement auf, das starr mit der Zugstange verbindbar ist, z.B. über eine Schraubverbindung, über ein Bajonett oder über eine Spannbuchse. Das Basiselement kann eine zentrale Aufnahmeöffnung aufweisen, um die Zugstange aufzunehmen, oder (wenn genügend Raum zur Verfügung steht) einen Zapfen, der in einer axialen Bohrung der Zugstange fixierbar ist. Das Spannelement weist zudem ein Axialdruckelement auf, das gegenüber dem Basiselement axial in Richtung der zweiten Spindelwelle bewegbar, insbesondere axial verschiebbar, ist, um die zweite Spindelwelle axial in Richtung der ersten Spindelwelle zu drücken. Das Axialdruckelement kann insbesondere ringförmig sein und die zentrale Aufnahmeöffnung oder den Zapfen des Basiselements umgeben; in diesem Fall kann das Axialdruckelement auch als "Druckring" bezeichnet werden. Das Axialdruckelement bildet die schon erwähnte ringförmige Auflagefläche. Das Spannelement weist ausserdem mindestens ein Betätigungselement auf, wobei das Betätigungselement relativ zum Basiselement bewegbar ist, um das Axialdruckelement relativ zum Basiselement axial zu bewegen. Als Betätigungselement kann z.B. eine Druckschraube dienen, die entlang einer Längs- oder Querrichtung in das Basiselement einschraubbar ist. Derartige Spannelemente sind aus dem Stand der Technik an sich bekannt und kommerziell in vielen Varianten erhältlich.

In einigen Ausführungsformen erfolgt die Kraftübertragung vom Betätigungselement zum Axialdruckelement rein mechanisch. Beispielsweise können als Betätigungselemente mehrere Zylinderschrauben dienen, die axial am Basiselement gehalten sind und in das Axialdruckelement einschraubbar sind, um dieses relativ zum Basiselement axial zu verschieben. In anderen Ausführungsformen dienen ein oder mehrere Gewindestifte, die im Basiselement über eine Gewindeverbindung in Richtung des Axialdruckelements verstellbar sind, als Betätigungselemente. In nochmals anderen Ausführungsformen wirkt das Betätigungselement beispielsweise auf ein Getriebe, das das Axialdruckelement vorschiebt. Derartige Spannelemente sind z.B. unter den Bezeichnungen ESB, ESG oder ESD von der Enemac GmbH, Kleinwallstadt, Deutschland erhältlich.

In anderen Ausführungsformen erfolgt die Kraftübertragung vom Betätigungselement zum Axialdruckelement hydraulisch. Dazu kann das Betätigungselement z.B. als Druckschraube ausgebildet sein, die beim Einschrauben einen Druck in einem Hydrauliksystem erzeugt, wobei dieser Druck auf das Axialdruckelement wirkt. Derartige Spannelemente sind beispielsweise von der Albert Schrem Werkzeugfabrik GmbH, Herbrechtingen, Deutschland erhältlich.

Statt die axiale Druckkraft zwischen Zugstange und zweiter Spindelwelle mit einem Spannelement zu erzeugen, das im Betrieb an der Zugstange verbleibt, ist es auch denkbar, zunächst die Druckkraft mit einem Spannwerkzeug zu erzeugen, die Verbindung im gespannten Zustand mit einer einfachen Mutter zu fixieren, und das Spannwerkzeug anschliessend wieder zu entfernen.

Das Werkzeug kann aber auch auf eine andere Art als mit einer durchgehenden Zugstange zwischen der ersten Spindelwelle und der zweiten Spindelwelle verspannt werden, solange dadurch eine fest verspannte Einheit aus den beiden Spindelwellen und dem Werkzeug entsteht. So sind Ausführungsformen denkbar, bei denen eine erste Zugstange an einem ersten Ende mit dem Werkzeug verbindbar ist, beispielsweise mit dem Werkzeug verschraubbar oder über Hohlschaftkegel verbindbar. Die erste Zugstange kann sich dann durch eine axiale Bohrung der ersten Spindelwelle hindurch erstrecken und an ihrem zweiten Ende derart mit der ersten Spindelwelle verbindbar sein, dass eine axiale Druckkraft zwischen der ersten Spindelwelle und dem Werkzeug erzeugbar ist. Eine zweite Zugstange kann auf der gegenüberliegenden Seite des Werkzeugs angeordnet sein. Diese zweite Zugstange kann wiederum an einem ersten Ende mit dem Werkzeug verbindbar sein, beispielsweise mit dem Werkzeug verschraubbar oder über Hohlschaftkegel verbindbar. Die zweite Zugstange kann sich dann durch eine axiale Bohrung der zweiten Spindelwelle hindurch erstrecken und an ihrem zweiten Ende derart mit der zweiten Spindelwelle verbindbar sein, dass eine axiale Druckkraft zwischen der zweiten Spindelwelle und dem Werkzeug erzeugbar ist.

Um das Werkzeug zwischen den Spindelwellen aufzunehmen und ein Drehmoment auf das Werkzeug übertragen zu können, ist es von Vorteil, wenn an der ersten und/oder zweiten Spindelwelle eine Spindelnase derart ausgebildet ist, dass an der betreffenden Spindelnase durch eine zwischen dem Werkzeug und der Spindelnase wirkende axiale Druckkraft eine kraftschlüssige und/oder formschlüssige Verbindung zum Werkzeug herstellbar ist. Bevorzugt erfolgt die Verbindung zum Werkzeug über eine Konusverbindung, besonders bevorzugt über eine Konusverbindung mit Plananlage. Beispielsweise kann die Verbindung über eine der in DIN ISO 666:2013-12 genannten Ausführungen A, BF, BM, CF oder CM erfolgen.

Dabei ist es von Vorteil, wenn die beiden Spindelnasen derart unterschiedlich ausgebildet sind, dass das Werkzeug nur in einer vorbestimmten Lage zwischen den Spindelnasen aufnehmbar ist. Beispielsweise können die Durchmesser der beiden Spindelnasen unterschiedlich sein.

Um den Werkzeugwechsel zu erleichtern, ist es von Vorteil, wenn die zweite Spindeleinheit relativ zur ersten Spindeleinheit axial verschiebbar ist. Wenn beide Spindeleinheiten in einem gemeinsamen Spindelgehäuse untergebracht sind, kann dies dadurch erreicht werden, dass die Spindellager für die zweite Spindelwelle relativ zu diesem Spindelgehäuse axial verschiebbar sind.

Die erste und/oder zweite Spindeleinheit kann einen Antriebsmotor aufweisen, der dazu ausgebildet ist, die entsprechende Spindelwelle zu einer Drehung um die Werkzeugspindelachse anzutreiben, um so das Werkzeug anzutreiben. In einigen Ausführungsformen weist nur die erste Spindeleinheit einen Antriebsmotor auf, und die zweite Spindeleinheit bildet eine passive Gegenspindel für die erste Spindeleinheit, ohne einen eigenen Antriebsmotor. In anderen Ausführungsformen weist auch die zweite Spindeleinheit einen eigenen Antriebsmotor auf. Bei dem jeweiligen Antriebsmotor kann es sich insbesondere um einen Direktantrieb handeln.

Der Werkzeugkopf kann des Weiteren das schon erwähnte Werkzeug aufweisen, wobei das Werkzeug dann axial zwischen der ersten Spindelwelle und der zweiten Spindelwelle aufgenommen und vorzugsweise axial verspannt ist. Das Werkzeug kann ein Schleifwerkzeug sein, insbesondere ein Werkzeug für das Verzahnungsschleifen. Konkret kann das Werkzeug als Schleifschnecke oder Profilschleifscheibe ausgebildet sein oder mindestens eine Schleifschnecke und/oder mindestens eine Profilschleifscheibe umfassen. Das Werkzeug kann einteilig sein (z.B. in Form einer nicht abrichtbaren Schleifschnecke mit einem hartstoffbelegten Grundkörper, der direkt zwischen den Spindelwellen aufgenommen ist), oder es kann zwei- oder mehrteilig sein (z.B. in Form einer abrichtbaren Schleifschnecke oder eines Kombiwerkzeugs mit mehr als einem Schleifkörper, wobei der oder die Schleifkörper auf einer separaten Werkzeugaufnahme gehalten sind und die Werkzeugaufnahme zwischen den Spindelwellen aufgenommen ist).

Die vorliegende Erfindung stellt ausserdem eine Werkzeugmaschine zur Verfügung, die einen Werkzeugkopf der vorstehend genannten Art und mindestens eine Werkstückspindel, um ein Werkstück zur Drehung um eine Werkstückachse anzutreiben, aufweist. Die Werkzeugmaschine kann als Verzahnmaschine ausgebildet sein, insbesondere als Verzahnungsschleifmaschine. Dazu kann die Werkzeugmaschine eine Maschinensteuerung aufweisen, die dazu ausgebildet (insbesondere entsprechend programmiert) ist, die Maschine zu veranlassen, eine Verzahnung eines Werkstücks, das auf der mindestens einen Werkstückspindel aufgenommen ist, mit dem Werkzeug zu bearbeiten. Insbesondere kann die Maschinensteuerung dazu ausgebildet sein, die Maschine dazu zu veranlassen, die Verzahnung des Werkstücks durch Profilschleifen oder Wälzschleifen zu bearbeiten. Zu diesem Zweck kann die Maschinensteuerung dazu ausgebildet sein, eine geeignete Wälzkopplung zwischen der Werkstückspindel und der Werkzeugspindel herzustellen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Beispiel für eine Werkzeugmaschine zur Hartfeinbearbeitung von Zahnrädern durch Wälzschleifen in einer schematischen perspektivischen Ansicht, mit einem Werkzeugkopf gemäss einer ersten Ausführungsform;
- Fig. 2: den Werkzeugkopf der ersten Ausführungsform in einer schematischen perspektivischen Ansicht;
- Fig. 3: den Werkzeugkopf der ersten Ausführungsform in einer perspektivischen Schnittdarstellung;
- Fig. 4: den Werkzeugkopf der ersten Ausführungsform in einer Schnittdarstellung mit Blickrichtung von vorne, entgegen der X-Richtung;
- Fig. 5: ein schematisches Blockdiagramm zur Illustration der Steuerung der Wuchteinrichtungen im Werkzeugkopf der ersten Ausführungsform;
- Fig. 6: einen Werkzeugkopf gemäss einer zweiten Ausführungsform in einer perspektivischen Schnittdarstellung;
- Fig. 7: einen Werkzeugkopf gemäss einer dritten Ausführungsform in einer perspektivischen Schnittdarstellung, gemeinsam mit einer Werkstückspindel;
- Fig. 8: eine vergrösserte Ansicht des Bereichs D in der Fig. 7;
- Fig. 9: eine Spannmutter in einem zentralen Längsschnitt; und
- Fig. 10: die Spannmutter der Fig. 9 in einer perspektivischen Ansicht.

### BESCHREIBUNG BEVORZUGTER AUSFÜHRUNGSFORMEN

### Definitionen

*Verzahnmaschine:* Eine Maschine, die für die Erzeugung oder Bearbeitung von Verzahnungen an Werkstücken ausgebildet ist, insbesondere von Innen- oder Aussenverzahnungen an Zahnrädern. Beispielsweise kann es sich dabei um eine Feinbearbeitungsmaschine handeln, mit der vorverzahnte Werkstücke bearbeitet werden, insbesondere um eine Hartfeinbearbeitungsmaschine, mit der vorverzahnte Werkstücke nach dem Härten bearbeitet werden. Eine Verzahnmaschine weist eine Maschinensteuerung auf, die so programmiert ist, dass sie eine automatische Bearbeitung der Verzahnung steuern kann.

*Wälzbearbeitung:* Eine Art der Verzahnungsbearbeitung, bei der ein Werkzeug auf einem Werkstück abwälzt und dabei eine Schnittbewegung erzeugt. Es sind verschiedene Wälzbearbeitungsverfahren bekannt, wobei zwischen Verfahren mit geometrisch unbestimmter Schneide wie Wälzschleifen oder Wälzhonen und Verfahren mit geometrisch bestimmter Schneide wie Wälzfräsen, Wälzschälen, Wälzschaben oder Wälzstossen unterschieden wird.

*Wälzschleifen:* Beim Wälzschleifverfahren handelt es sich um ein kontinuierliches spanabhebendes Verfahren mit geometrisch unbestimmter Schneide zur Herstellung achssymmetrischer periodischer Strukturen, bei dem als Werkzeug eine Schleifscheibe mit schneckenförmig profilierter Aussenkontur ("Schleifschnecke") verwendet wird. Werkzeug und Werkstück werden auf Rotationsspindeln aufgenommen. Durch eine Kopplung der Drehbewegungen von Werkzeug und Werkstück um die Drehachsen wird die verfahrenstypische Wälzbewegung realisiert. Durch diese Wälzbewegung und eine axiale Vorschubbewegung des Werkzeugs oder des Werkstücks entlang der Werkstückachse wird eine Schnittbewegung erzeugt.

*Spindeleinheit:* Im Werkzeugmaschinenbau wird eine drehbare Welle, auf der ein Werkzeug oder Werkstück aufspannbar ist, meist als "Spindel" bezeichnet. Häufig wird aber auch eine Baugruppe, die neben der drehbaren Welle auch die zugehörigen Spindellager zur drehbaren Lagerung der Welle und das zugehörige Gehäuse umfasst, als "Spindel" bezeichnet. Im vorliegenden Dokument wird der Begriff "Spindel" in diesem Sinne verwendet. Die Welle alleine wird als "Spindelwelle" bezeichnet. Eine Baugruppe, die neben der Spindelwelle mindestens auch die zugehörigen Spindellager umfasst, wird als "Spindeleinheit" bezeichnet. Eine "Spindeleinheit" kann ein eigenes Gehäuse umfassen, sie kann aber auch zusammen mit einer weiteren Spindeleinheit in einem gemeinsamen Gehäuse aufgenommen sein.

*Werkzeugkopf:* Als "Werkzeugkopf" wird im vorliegenden Dokument eine Baugruppe bezeichnet, die dazu ausgebildet ist, ein Bearbeitungswerkzeug aufzunehmen und zu einer Drehung anzutreiben. Der Werkzeugkopf kann insbesondere auf einem Schwenkkörper und/oder einem oder mehreren Schlitten montiert sein, um das Werkzeug relativ zu einem Werkstück auszurichten und zu positionieren.

*Ringwuchtsystem:* Ein Ringwuchtsystem weist zwei benachbart angeordnete Wuchtringe auf, die eine Welle umgeben und von dieser mitgenommen werden. Jeder Wuchtring weist eine vorgegebene Zusatzunwucht gleicher Grösse auf. Die Orientierung der Wuchtringe um die Rotationsachse der Welle ist einstellbar. Wenn sich die Zusatzunwuchten der beiden Wuchtringe diametral gegenüberstehen, heben sich deren Wirkungen auf. Wenn beide Zusatzunwuchten dieselbe Winkelstellung haben, wird die maximale Auswuchtkapazität erreicht. Durch das Einstellen auf andere Winkel kann die resultierende Korrekturunwucht innerhalb dieser Grenzen nach Grösse und Richtung frei eingestellt werden.

### Aufbau einer beispielhaften Werkzeugmaschine

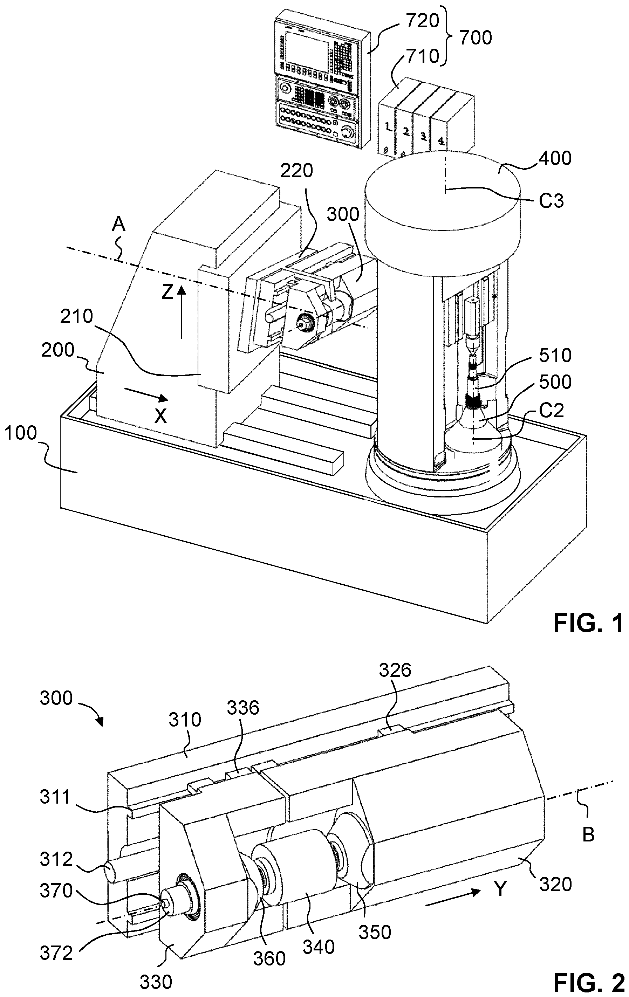

In der Fig. 1 ist beispielhaft eine Werkzeugmaschine zur Hartfeinbearbeitung von Zahnrädern durch Wälzschleifen dargestellt. Die Maschine weist ein Maschinenbett 100 auf, auf dem ein Werkzeugträger 200 entlang einer horizontalen Zustellrichtung X verschiebbar angeordnet ist. Ein Z-Schlitten 210 ist entlang einer vertikalen Richtung Z verschiebbar am Werkzeugträger 200 angeordnet. Der Z-Schlitten 210 trägt einen Schwenkkörper 220, der gegenüber dem Z-Schlitten 210 um eine horizontale Schwenkachse A schwenkbar ist. Die Schwenkachse A verläuft parallel zur Zustellrichtung X. Auf dem Schwenkkörper 220 ist ein nur symbolisch dargestellter Werkzeugkopf 300 angeordnet, der nachstehend näher beschrieben wird.

Auf dem Maschinenbett 100 ist ausserdem ein schwenkbarer Werkstückträger in Form eines Drehturms 400 angeordnet. Der Drehturm 400 ist um eine vertikale Schwenkachse C3 zwischen mehreren Drehstellungen verschwenkbar. Er trägt zwei Werkstückspindeln 500, auf denen jeweils ein Werkstück 510 aufspannbar ist. Jede der Werkstückspindeln 500 ist zu einer Drehung um eine Werkstückachse antreibbar. In der Fig. 1 ist die Werkstückachse der sichtbaren Werkstückspindel 500 mit C2 bezeichnet. Die Werkstückachse der in Fig. 1 nicht sichtbaren Werkstückspindel wird als C1-Achse bezeichnet. Die beiden Werkstückspindeln befinden sich auf dem Drehturm 400 in diametral gegenüberliegenden (d.h. bezüglich der Schwenkachse C3 um 180° versetzten) Positionen. Auf diese Weise kann eine der beiden Werkstückspindeln be- und entladen werden, während auf der anderen Werkstückspindel ein Werkstück bearbeitet wird. Dadurch werden unerwünschte Nebenzeiten weitgehend vermieden. Ein derartiges Maschinenkonzept ist z.B. aus WO 00/035621 A1 bekannt.

Die Maschine weist eine nur symbolisch dargestellte Maschinensteuerung 700 auf, welche mehrere Steuerungsmodule 710 sowie eine Bedientafel 720 umfasst. Jedes der Steuerungsmodule 710 steuert eine Maschinenachse an und/oder empfängt Signale von Sensoren.

### Werkzeugkopf gemäss einer ersten Ausführungsform

In den Figuren 2 bis 4 ist ein Werkzeugkopf gemäss einer ersten Ausführungsform illustriert. Der Werkzeugkopf umfasst eine Basis 310, die starr mit dem Schwenkkörper 220 verbunden ist. Auf der Basis 310 ist eine Linearführung 311 ausgebildet. Auf der Linearführung 311 sind eine erste Spindeleinheit 320 und eine zweite Spindeleinheit 330 entlang einer Shiftrichtung Y verschiebbar geführt. Hierzu weisen die Spindeleinheiten jeweils entsprechende Führungsschuhe 326, 336 auf. Die Shiftrichtung Y verläuft senkrecht zur X-Achse und in einem um die A-Achse einstellbaren Winkel zur Z-Achse. Zwischen den Spindeleinheiten 320, 330 ist ein Werkzeug 340 gehalten.

Die zweite Spindeleinheit 320 und die erste Spindeleinheit 330 können miteinander gekoppelt werden, nachdem das Werkzeug 340 zwischen ihnen aufgenommen wurde. Sie lassen sich im gekoppelten Zustand mit einem nicht zeichnerisch dargestellten Shiftantrieb und einem Kugelgewindetrieb 312 gemeinsam entlang der Shiftrichtung Y bewegen, um den Werkzeugbereich, der mit einem Werkstück 510 auf der C1-Achse in Eingriff kommt, entlang der Werkzeugachse zu verändern.

### Aufbau der Spindeleinheiten

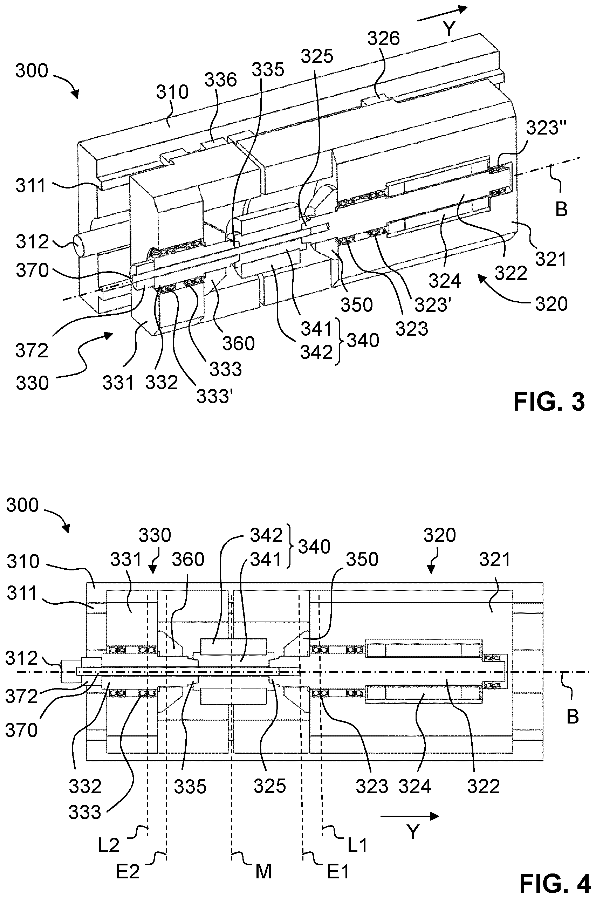

In den Figuren 3 und 4 ist der Aufbau der Spindeleinheiten 320, 330 näher illustriert.

Im vorliegenden Beispiel handelt es sich bei der Spindeleinheit 320 um eine Motorspindel mit einem Antriebsmotor 324, der direkt eine erste Spindelwelle 322 zur einer Drehung um eine Werkzeugspindelachse B antreibt. Die Werkzeugspindelachse B verläuft parallel zur Shiftrichtung Y.

Die erste Spindelwelle 322 ist im Spindelgehäuse 321 der ersten Spindeleinheit 320 an drei Lagerstellen in Spindellagern 323, 323', 323" gelagert. Die Lagerstellen befinden sich an unterschiedlichen axialen Positionen entlang der ersten Spindelwelle 322. Zwei dieser Lagerstellen befinden sich zwischen dem Antriebsmotor 324 und dem werkzeugseitigen Ende der ersten Spindeleinheit 320. Die entsprechenden Spindellager 323, 323' bilden ein Fest-Los-Lager oder ein Stützlager, d.h. an mindestens einer dieser Lagerstellen können die Spindellager sowohl radiale als auch axiale Kräfte aufnehmen. Eine weitere Lagerstelle befindet sich auf der werkzeugabgewandten Seite des Antriebsmotors 324. Das an dieser Lagerstelle angeordnete Spindellager 323" ist als Loslager ausgebildet, d.h., es nimmt Radialkräfte auf, ermöglicht aber axiale Bewegungen.

Jede der drei Lagerstellen definiert eine radiale Lagerebene. Die Lagerebenen verlaufen jeweils orthogonal zur Werkzeugspindelachse B. In der Fig. 4 ist die Lagerebene für diejenige Lagerstelle, die am nächsten zum werkzeugseitigen Ende der ersten Spindelwelle 322 angeordnet ist, als erste Lagerebene L1 eingezeichnet. Das entsprechende werkzeugnahe Spindellager ist das Spindellager 323.

Bei der zweiten Spindeleinheit 330 handelt es sich im vorliegenden Beispiel um eine nicht angetriebene Gegenspindel. Die zweite Spindeleinheit 330 weist eine zweite Spindelwelle 332 auf, die im Spindelgehäuse 331 der zweiten Spindeleinheit 330 an zwei Lagerstellen entlang der Spindelwelle in Spindellagern 333, 333' gelagert ist. Diese Spindellager können je nach Ausführung als Festlager oder Loslager ausgebildet sein. Jede der beiden Lagerstellen definiert wiederum eine radiale Lagerebene. In der Fig. 4 ist die Lagerebene für diejenige Lagerstelle, die am nächsten zum werkzeugseitigen Ende der zweiten Spindelwelle 332 angeordnet ist, als zweite Lagerebene L2 eingezeichnet. Das entsprechende werkzeugnahe Spindellager ist das Spindellager 333.

### Axiale Verspannung des Werkzeugs

Das Werkzeug 340 weist im vorliegenden Beispiel eine Werkzeugaufnahme 341 auf, der einen schneckenförmig profilierten, abrichtbaren Schleifkörper 342 trägt. Die Werkzeugaufnahme 341 ist im vorliegenden Beispiel als Aufnahmeflansch für den Schleifkörper nach DIN ISO 666:2013-12 ausgebildet. Zur Verbindung mit den Spindelwellen 322, 332 weist die Werkzeugaufnahme 341 an beiden Enden jeweils eine Kegelaufnahme mit Plananlage auf, beispielsweise eine Kurzkegelaufnahme 1:4 nach DIN ISO 702-1:2010-04.

An den werkzeugseitigen Enden der Spindelwellen 322, 332 sind sich gegenüberstehende Spindelnasen 325, 335 ausgebildet. Die Form der Spindelnasen 325, 335 ist komplementär zur Form der Kegelaufnahmen der Werkzeugaufnahme 341. Sie weisen jeweils eine zum Werkzeug 340 hin konisch zulaufende Form und eine Plananlagefläche an ihrer jeweiligen Stirnseite auf. Beispielsweise kann jede Spindelnase als Kegelschaft 1:4 nach DIN ISO 702-1:2010-04 ausgebildet sein.

Zwischen dem Werkzeug 340 und den Spindelwellen 322, 332 besteht also jeweils eine Konusverbindung mit Plananlage. Die Konusverbindungen können an den beiden Enden des Werkzeugs unterschiedliche Durchmesser aufweisen, um sicherzustellen, dass das Werkzeug 340 nur in der korrekten Orientierung zwischen den Spindelwellen 322, 332 aufgenommen werden kann.

Das Werkzeug 340 ist mit einer Zugstange 370 und einer Spannmutter 372 zwischen den Spindelwellen 332, 332 axial verspannt. Dazu weisen das Werkzeug 340 und die zweite Spindelwelle 332 jeweils eine durchgehende zentrale axiale Bohrung auf. An ihrem werkzeugseitigen Ende weist auch die erste Spindelwelle 322 eine zentrale axiale Bohrung auf. Diese Bohrung ist im vorliegenden Beispiel nicht durchgehend. Sie ist werkzeugseitig offen, und in der Bohrung ist ein Innengewinde ausgebildet. Die Zugstange 370 ist durch die zentralen Bohrungen der Spindelwelle 332 und des Werkzeugs 340 hindurchgeschoben. Die Zugstange 370 weist an ihrem zur ersten Spindeleinheit 320 hin weisenden Ende ein Aussengewinde auf, das in das Innengewinde der ersten Spindelwelle 322 eingeschraubt ist. An ihrem anderen Ende weist sie ebenfalls ein Aussengewinde auf. Auf dieses Aussengewinde ist die Spannmutter 372 aufgeschraubt. Durch Anziehen der Spannmutter 372 übt die Spannmutter 372 einen axialen Druck auf die zweite Spindelwelle 332 in Richtung des Werkzeugs 340 aus. Dadurch wird das Werkzeug 340 zwischen den Spindelwellen 332, 332 axial verspannt. Insgesamt entsteht so eine einzige durchgehende Welle mit hoher Steifigkeit.

### Wuchteinrichtungen

Auf der ersten Spindelwelle 322 ist im axialen Bereich zwischen dem Gehäuse 321 der ersten Spindeleinheit 320 und dem Werkzeug 340 eine erste Wuchteinheit 350 angeordnet. Eine zweite Wuchteinheit 360 ist auf der zweiten Spindelwelle 332 axial zwischen dem Gehäuse 331 der zweiten Spindeleinheit 330 und dem Werkzeug 340 angeordnet. Die Wuchteinheiten 350, 360 umgeben die jeweilige Spindelwelle 322, 332 ausserhalb des Gehäuses der jeweiligen Spindeleinheit 320, 330. Sie weisen jeweils ein Gehäuse auf, das sich von der zugeordneten Spindeleinheit in Richtung des Werkzeugs 340 verjüngt. Durch die sich verjüngende Aussenkontur der Wuchteinheiten 350, 360 wird die Gefahr von Kollisionen zwischen den Wuchteinrichtungen und einem Werkstück 510 vermindert.

Jede der Wuchteinheiten 350, 360 ist als Ringwuchtsystem ausgebildet. Dazu weist jede der Wuchteinheiten 350, 360 einen Rotor mit zwei Wuchtringen auf, die die jeweilige Spindelwelle umgeben und von dieser mitgenommen werden. Jede der Wuchteinheiten 350, 360 weist ausserdem einen Stator auf. Dieser ist mit dem jeweiligen Spindelgehäuse 321, 331 verbunden. Der Stator enthält einerseits Sensoren zur Detektion von Schwingungen des jeweiligen Spindelgehäuses, der Drehzahl der jeweiligen Spindelwelle und der Winkelposition jedes Wuchtrings. Andererseits enthält der Stator einen Aktor mit einer Spulenanordnung, um die Winkelposition der Wuchtringe auf der jeweiligen Spindelwelle berührungslos zu verändern.

Die erste Wuchteinheit 350 definiert eine erste Wuchtebene E1, in der die Wuchtringe dieser Wuchteinheit angeordnet sind. Die erste Wuchtebene E1 verläuft orthogonal zur Werkzeugspindelachse B. Sie verläuft parallel zur ersten Lagerebene L1 und zu einer radialen Schwerpunktsebene des Werkzeugs 340. Bezüglich der Werkzeugspindelachse B befindet sich die erste Wuchtebene E1 zwischen der Schwerpunktsebene M und der ersten Lagerebene L1, ausserhalb des ersten Spindelgehäuses 321.

Entsprechend definiert die zweite Wuchteinheit 360 eine zweite Wuchtebene E2, in der die Wuchtringe dieser Wuchteinheit angeordnet sind. Diese Wuchtebene befindet sich zwischen der Schwerpunktsebene M und der zweiten Lagerebene L2, ausserhalb des zweiten Spindelgehäuses 331.

### Automatisches Auswuchten in zwei Ebenen

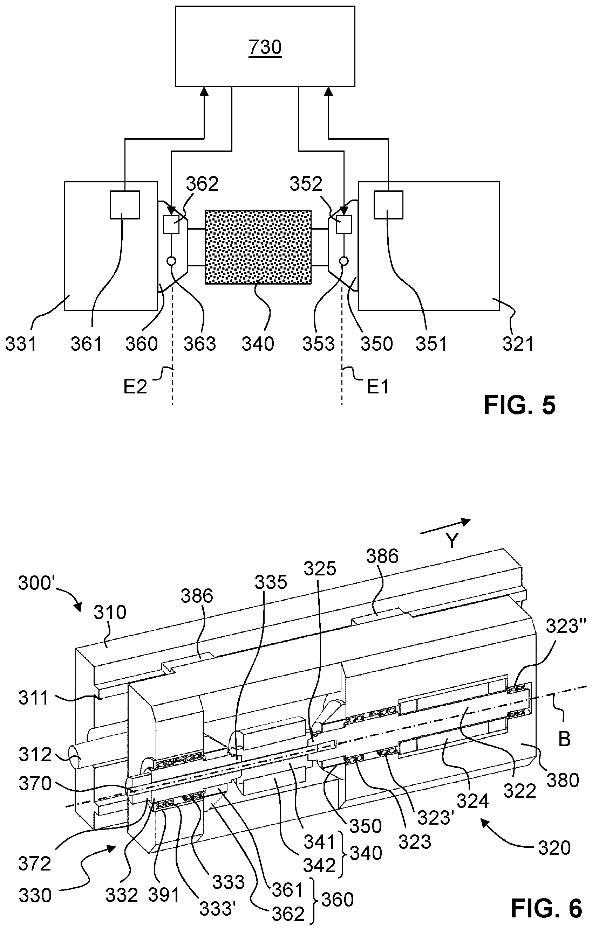

In der Fig. 5 ist in stark schematischer Weise ein System zum automatischen Auswuchten in zwei Ebenen E1, E2 illustriert. Schwingungssensoren 351, 361 und Aktoren 352, 362 der beiden Wuchteinheiten 350, 360 wirken mit einer Steuereinrichtung 730 zusammen. Die Steuereinrichtung 730 kann in die Maschinensteuerung 700 integriert oder separat ausgebildet sein. Mit Hilfe der Steuereinrichtung 730 werden die Winkelpositionen der Wuchtringe von beiden Wuchteinheiten 350, 360 automatisch so berechnet und eingestellt, dass die resultierenden Korrekturunwuchten 353, 363 die statische und dynamische Unwucht des Systems aus dem Werkzeug 340 und den damit verspannten Spindelwellen 322, 332 kompensiert und dementsprechend Schwingungen der Spindelgehäuse 321, 331 minimiert werden. Auf diese Weise wird das System in den beiden Wuchtebenen E1, E2 ausgewuchtet.

Ringwuchtsysteme mit einer Steuereinrichtung zum automatischen Zwei-Ebenen-Wuchten sind an sich bekannt und von verschiedenen Anbietern kommerziell erhältlich. Beispielhaft sei das elektromagnetische Ringwuchtsystem AB 9000 der Hofmann Mess- und Auswuchttechnik GmbH & Co. KG, Pfungstadt, Deutschland genannt.

### Gemeinsames Spindelgehäuse

In der Fig. 6 ist ein Werkzeugkopf 300' gemäss einer zweiten Ausführungsform illustriert. Gleiche oder gleichwirkende Komponenten wie in der ersten und zweiten Ausführungsform sind mit denselben Bezugszeichen wie in den Figuren 2 bis 5 versehen.

Der Werkzeugkopf 300' der zweiten Ausführungsform unterscheidet sich vom Werkzeugkopf 300 der ersten Ausführungsform dadurch, dass die beiden Spindeleinheiten 320, 330 in einem gemeinsamen Spindelgehäuse 380 aufgenommen sind. Dieses ist mit Führungsschuhen 386 auf der Linearführung 311 entlang der Shiftrichtung Y geführt.

Zum Werkzeugwechsel wird die zweite Spindeleinheit 330 axial gegenüber dem Spindelgehäuse 380 zurückgezogen. Dazu sind die Spindellager 333 der zweiten Spindeleinheit in einer Lageraufnahme 391 aufgenommen. Im vorliegenden Beispiel ist die Lageraufnahme 391 eine Lagerbüchse, die z.B. als Gleitbüchse oder Kugelrollbüchse ausgebildet sein kann. Die Lageraufnahme 391 ist im Spindelgehäuse 380 axial verschiebbar geführt.

Der Rotor 361 der zweiten Wuchteinheit 360 ist gegenüber dem Stator 362 dieser Wuchteinheit axial verschiebbar. Der Aussendurchmesser des Rotors 361 ist kleiner als der Innendurchmesser desjenigen Bereichs des Spindelgehäuses 380, in dem die Lageraufnahme 391 geführt ist. Wenn die zweite Spindeleinheit 330 axial aus dem Spindelgehäuse 380 zurückgezogen wird, nimmt diese den Rotor 361 der zweiten Wuchteinheit 360 in der axialen Richtung mit, so dass dieser gemeinsam mit der zweiten Spindeleinheit 330 in das Spindelgehäuse 380 zurückgezogen wird. Der Stator 362 der zweiten Wuchteinheit 360 ist dagegen am Spindelgehäuse 380 fixiert und bleibt beim Rückzug der zweiten Spindeleinheit 330 unbeweglich.

Alternativ ist es auch denkbar, die zweite Wuchteinheit 360 so anzuordnen, dass die gesamte zweite Wuchteinheit 360, d.h. sowohl der Rotor 361 als auch der Stator 362, gemeinsam mit der zweiten Spindeleinheit 330 zurückgezogen werden kann, um das Werkzeug zu wechseln.

### Zweiseitiger Antrieb

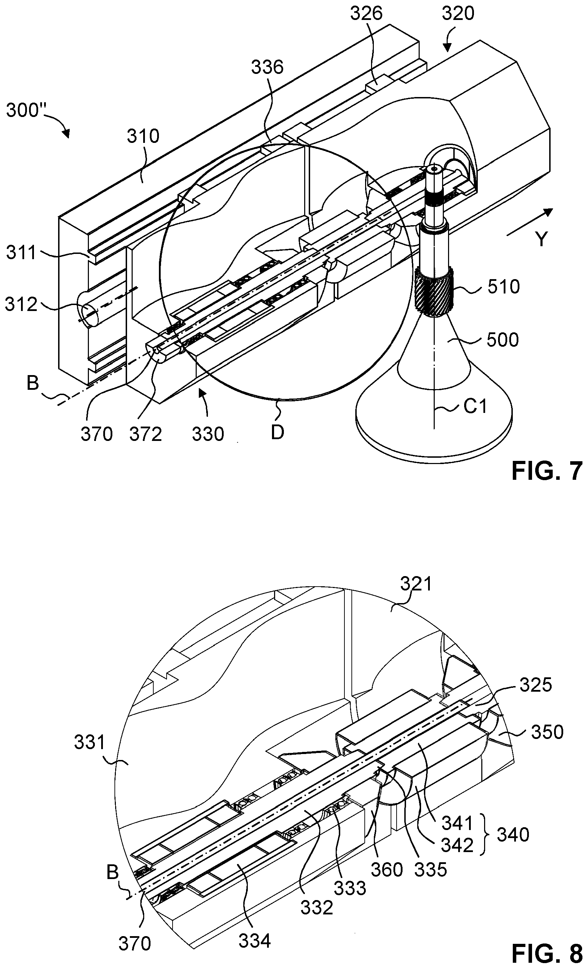

In den Figuren 7 und 8 ist ein Werkzeugkopf 300" gemäss einer dritten Ausführungsform illustriert. Gleiche oder gleichwirkende Komponenten wie in der ersten und zweiten Ausführungsform sind mit denselben Bezugszeichen wie in den Figuren 2 bis 6 versehen.

Der Werkzeugkopf 300" der dritten Ausführungsform unterscheidet sich vom Werkzeugkopf 300 der ersten Ausführungsform dadurch, dass die zweite Spindeleinheit 330 ebenfalls als Motorspindel ausgeführt ist, mit einem zweiten Antriebsmotor 334. Vorzugsweise ist der zweite Antriebsmotor 334 kleiner dimensioniert als der erste Antriebsmotor 324, so dass er weniger als die Hälfte des gesamten Drehmoments auf das Werkzeug 340 erzeugt, z.B. zwischen 35% und 45% des gesamten Drehmoments. Durch diese asymmetrische Verteilung der Drehmomentenerzeugung zwischen den beiden Antriebsmotoren 324, 334 werden störende Resonanzen vermieden.

### Spannmutter

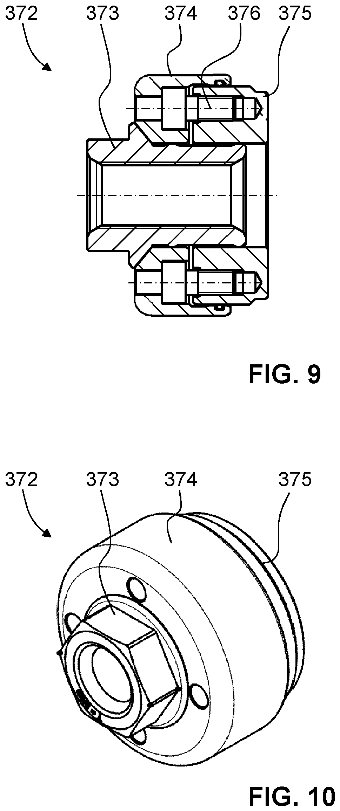

In den Figuren 9 und 10 ist beispielhaft eine Spannmutter 372 illustriert, wie sie in den vorstehend beschriebenen Ausführungsformen zum Einsatz kommen kann.

Die Spannmutter 372 weist ein Basiselement 373 auf, das eine zentrale Bohrung mit einem Innengewinde definiert, um das Basiselement 373 auf eine Zugstange mit einem entsprechenden Aussengewinde aufzuschrauben. An einem Ende ist das Basiselement 373 aussenseitig nach Art einer Sechskantmutter ausgebildet. Auf dem Basiselement 373 ist ein Stützring 374 angebracht. Dieser liegt an einem Bund des Basiselements 373 derart an, dass er an einer axialen Bewegung in einer Richtung (in der Fig. 9 nach links) gehindert ist. Auf dem Basiselement 373 ist ausserdem ein ringförmiges Axialdruckelement 375 axial verschiebbar geführt. Mehrere Betätigungselemente 376 in Form von Druckschrauben sind in das Axialdruckelement 375 eingeschraubt und derart axial am Stützring 374 abgestützt, dass sie entlang einer Richtung (in der Fig. 9 nach links) an einer axialen Bewegung gehindert sind. Indem die Druckschrauben aus dem Axialdruckelement 375 herausgeschraubt werden, wird das Axialdruckelement 375 gegenüber dem Basiselement 373 entlang derjenigen Richtung, die der Stützrichtung entgegengesetzt ist (in Fig. 9 nach rechts) vorgeschoben.

Um ein Werkzeug 340 zwischen den beiden Spindelwellen 322, 332 zu verspannen, wird das Axialdruckelement 375 zunächst gegenüber dem Basiselement 373 ganz zurückbewegt, indem die Druckschrauben so weit wie möglich in das Axialdruckelement 375 eingeschraubt werden. Nun wird die Spannmutter 372 auf die Zugstange 370 aufgeschraubt und mit Hilfe des aussenseitigen Sechskants am Basiselement 373 an die zweite Spindelwelle 332 angestellt. Dies erfolgt mit einem verhältnismässig geringen Drehmoment. Anschliessend wird mit Hilfe der Druckschrauben das ringförmige Axialdruckelement 375 kontrolliert so weit in Richtung der zweiten Spindelwelle 332 vorgeschoben, bis die gewünschte Spannkraft auf das Werkzeug 340 wirkt. Dabei liegt das Axialdruckelement 375 mit einer ringförmigen Auflagefläche an der zweiten Spindelwelle 332 an.

Selbstverständlich sind auch andere Konstruktionen einer Spannmutter einsetzbar, wie sie aus dem Stand der Technik an sich bekannt sind. Die Kraftübertragung kann z.B. auf eine andere Weise als dargestellt erfolgen. Insbesondere kann eine hydraulische Spannmutter eingesetzt werden.

Statt einer Spannmutter mit Innengewinde kann auch ein Spannelement eingesetzt werden, das auf eine andere Weise als über eine Schraubverbindung mit der Zugstange verbindbar ist, z.B. über ein Bajonett oder über eine Spannbuchse.

### Weitere Abwandlungen

Die Schnittstelle zwischen den Spindelwellen 322, 332 und dem Werkzeug 340 kann auch anders als in den vorstehend beschriebenen Ausführungsformen ausgebildet sein. Insbesondere kann eine andere Art von Konusverbindung zu Einsatz kommen. Dabei können beliebige bekannte Konus-Verbindungen eingesetzt werden, z.B. die in DIN ISO 666:2013-12 genannten Ausführungen A, BF, BM, CF oder CM. Für Details wird auf die DIN ISO 666:2013-12 sowie auf die darin genannten weiteren Normen DIN EN ISO 1119:2012-04, DIN ISO 702-1:2010-04, ISO 12164-1:2001-12 und ISO 12164-2:2001-12 verwiesen.

In allen Ausführungsformen kann sich die Zugstange 370 statt durch die zweite Spindelwelle 332 durch die erste Spindelwelle 322 hindurch erstrecken und an ihrem Ende mit der zweiten Spindelwelle 332 verbunden sein. Das Spannelement übt dann entsprechend eine Axialkraft auf die erste Spindelwelle in Richtung der zweiten Spindelwelle aus.

Um das Werkzeug 340 axial zwischen der ersten Spindelwelle 322 und der zweiten Spindelwelle 332 zu verspannen, können statt einer zentralen Zugstange oder ergänzend dazu auch zwei oder mehr Zugstangen eingesetzt werden, die parallel zueinander und radial beabstandet zur Werkzeugspindelachse B verlaufen und in unterschiedlichen Winkelpositionen relativ zur Werkzeugspindelachse B angeordnet sind.

Die Fixierung des Werkzeugs zwischen der ersten Spindelwelle und der zweiten Spindelwelle kann auch auf eine andere Weise als mit einer durchgehenden Zugstange erfolgen, beispielsweise mit im Inneren der jeweiligen Spindelwelle angeordneten Spannsystemen. Dazu kann die Verbindung zwischen dem Werkzeug und den Spindelwellen z.B. über Hohlschaftkegel nach ISO 12164-1:2001-12 und ISO 12164-2:2001-12 erfolgen.

Das Werkzeug kann anders ausgebildet sein als in den vorstehend erläuterten Ausführungsformen. Insbesondere kann das Werkzeug einteilig ausgebildet sein. Beispielsweise kann es sich bei dem Werkzeug um eine nicht abrichtbare CBN-Schleifschnecke handeln, deren CBN-Beschichtung direkt auf einem Werkzeuggrundkörper aufgebracht ist. Die Schnittstellen zu den Spindelnasen 325, 335 sind dann statt an einem separaten Werkzeugträger direkt an dem Werkzeuggrundkörper ausgebildet. Das Werkzeug muss nicht notwendig eine Schleifschnecke sein. Es kann sich z.B. auch um eine Profilschleifscheibe, eine Kombination von zwei oder mehr Profilschleifscheiben oder eine Kombination aus einer oder mehreren Schleifschnecken und einer oder mehreren Profilschleifscheiben handeln.

In den vorstehend beschriebenen Ausführungsformen handelt es sich bei den Spindellagern 323 um Wälzlager. Stattdessen können auch andere Arten von Spindellagern zum Einsatz kommen, z.B. hydrostatische, hydrodynamische oder aerodynamische Lager, wie das im Stand der Technik an sich bekannt ist.

In den vorstehend beschriebenen Ausführungsformen kommen als Antriebsmotoren Direktantriebe zum Einsatz. Stattdessen ist es auch denkbar, Getriebemotoren einzusetzen.

Während als Wuchteinrichtungen vorzugsweise Ringwuchtsysteme zum Einsatz kommen, sind auch andere Arten von Wuchteinrichtungen denkbar, z.B. Hydro-Wuchtsysteme, wie sie aus dem Stand der Technik an sich bekannt sind. Bei solchen Wuchtsystemen erfolgt das Auswuchten durch das Einspritzen einer Flüssigkeit in Wuchtkammern, die in Umfangsrichtung verteilt angeordnet sind.

### BEZUGSZEICHENLISTE

- 100: Maschinenbett
- 200: Werkzeugträger
- 210: Z-Schlitten
- 220: Schwenkkörper
- 300, 300', 300": Werkzeugkopf
- 310: Basis
- 311: Linearführung
- 312: Kugelgewindetrieb
- 320: erste Spindeleinheit
- 321: erstes Spindelgehäuse
- 322: erste Spindelwelle
- 323, 323', 323": erste Spindellager
- 324: erster Antriebsmotor
- 325: erste Spindelnase
- 326: Führungsschuh
- 330: zweite Spindeleinheit
- 321: zweites Spindelgehäuse
- 332: zweite Spindelwelle
- 333, 333': zweite Spindellager
- 334: zweiter Antriebsmotor
- 335: zweite Spindelnase
- 336: Führungsschuh
- 340: Werkzeug
- 341: Werkzeugaufnahme
- 342: Schleifkörper
- 350: erste Wuchteinheit
- 351: Schwingungssensor
- 352: Aktor
- 360: zweite Wuchteinheit
- 361: Schwingungssensor
- 362: Aktor
- 370: Zugstange
- 372: Spannmutter
- 373: Basiselement
- 374: Stützring
- 375: Axialdruckelement
- 376: Betätigungselement
- 380: gemeinsames Spindelgehäuse
- 386: Führungsschuh
- 387: Lageraufnahme
- 400: Drehturm
- 500: Werkstückspindel
- 510: Werkstück
- 700: Maschinensteuerung
- 710: Steuerungsmodul
- 720: Bedientafel
- 730: Steuereinrichtung

- X, Y, Z: Linearachse
- A: Schwenkachse
- B: Werkzeugachse
- C1, C2: Werkstückachse
- C3: Schwenkachse des Turms
- E1, E2: Wuchtebene
- L1, L2: Lagerebene

## Patentansprüche

1. Werkzeugkopf (300) für eine Werkzeugmaschine, insbesondere für eine Verzahnmaschine, aufweisend:
eine erste Spindeleinheit (320) mit einer ersten Spindelwelle (322), die in der ersten Spindeleinheit (320) um eine Werkzeugspindelachse (B) drehbar gelagert ist;
eine erste Wuchteinrichtung (350), die der ersten Spindeleinheit (320) zugeordnet ist;
eine zweite Spindeleinheit (330) mit einer zweiten Spindelwelle (332), die in der zweiten Spindeleinheit (330) um die Werkzeugspindelachse (B) drehbar gelagert ist; und
eine zweite Wuchteinrichtung (360), die der zweiten Spindeleinheit (330) zugeordnet ist,
wobei die erste Spindeleinheit (320) und die zweite Spindeleinheit (330) derart koaxial zueinander angeordnet sind, dass ein Werkzeug (340) axial zwischen der ersten Spindelwelle (322) und der zweiten Spindelwelle (332) aufnehmbar ist,
**dadurch gekennzeichnet,**
**dass** die erste Wuchteinrichtung (350) die erste Spindelwelle (322) radial umgibt und axial zwischen einem werkzeugseitigen Spindellager (323) der ersten Spindeleinheit (320) und einem werkzeugseitigen Ende der ersten Spindelwelle (322) angeordnet ist, und/oder
**dass** die zweite Wuchteinrichtung (360)
die zweite Spindelwelle (332) radial umgibt
und axial zwischen einem werkzeugseitigen Spindellager (333) der zweiten Spindeleinheit (330) und einem werkzeugseitigen Ende der zweiten Spindelwelle (332) angeordnet ist.

2. Werkzeugkopf (300) nach Anspruch 1, wobei das Werkzeug (340) derart zwischen der ersten Spindelwelle (322) und der zweiten Spindelwelle (332) verspannbar ist, dass zwischen der ersten Spindelwelle (322) und der zweiten Spindelwelle (332) eine axiale Druckkraft auf das Werkzeug (340) wirkt.

3. Werkzeugkopf (300) nach Anspruch 2,
wobei die zweite Spindelwelle (332) mindestens eine axiale Bohrung aufweist,
wobei der Werkzeugkopf (300) mindestens eine Zugstange (370) aufweist, die sich durch die axiale Bohrung der zweiten Spindelwelle (332) hindurch erstreckt, wobei die Zugstange (370) an einem ersten Ende mit der ersten Spindelwelle (322) verbindbar ist, und
wobei die Zugstange (370) an einem zweiten Ende derart mit der zweiten Spindelwelle (332) verbindbar ist, dass zwischen der ersten Spindelwelle (322) und der zweiten Spindelwelle (332) eine axiale Druckkraft auf das Werkzeug (340) erzeugbar ist.

4. Werkzeugkopf nach Anspruch 3,
wobei der Werkzeugkopf (300) ein Spannelement (372) aufweist, das mit der Zugstange (370) an ihrem zweiten Ende verbindbar ist und dazu ausgebildet ist, die zweite Spindelwelle (332) axial in Richtung der ersten Spindelwelle (322) zu drücken,
wobei das Spannelement vorzugsweise aufweist:
ein Basiselement (373), das starr mit der Zugstange (370) verbindbar ist;
ein Axialdruckelement (375), das gegenüber dem Basiselement (373) axial in Richtung der zweiten Spindelwelle (332) bewegbar ist, um die zweite Spindelwelle (332) axial in Richtung der ersten Spindelwelle (322) zu drücken; und
mindestens ein Betätigungselement (376), wobei das Betätigungselement (376) relativ zum Basiselement (373) bewegbar ist, um das Axialdruckelement (375) relativ zum Basiselement (373) axial zu bewegen.

5. Werkzeugkopf (300) nach einem der vorhergehenden Ansprüche,
wobei am werkzeugseitigen Ende der ersten Spindelwelle (322) eine erste Spindelnase (325) derart ausgebildet ist, dass an der ersten Spindelnase (325) durch eine axiale Druckkraft eine kraftschlüssige und/oder formschlüssige Verbindung zum Werkzeug (340) herstellbar ist, insbesondere eine Konusverbindung, vorzugsweise eine Konusverbindung mit Plananlage, und
wobei am werkzeugseitigen Ende der zweiten Spindelwelle (332) eine zweite Spindelnase (335) derart ausgebildet ist, dass an der zweiten Spindelnase (335) durch eine axiale Druckkraft eine kraftschlüssige und/oder formschlüssige Verbindung zum Werkzeug (340) herstellbar ist, insbesondere eine Konusverbindung, vorzugsweise eine Konusverbindung mit Plananlage.

6. Werkzeugkopf (300) nach Anspruch 5,
wobei die erste Spindelnase (325) und die zweite Spindelnase (335) derart unterschiedlich ausgebildet sind, dass das Werkzeug (340) nur in einer vorbestimmten Lage zwischen den Spindelnasen (325, 335) aufnehmbar ist.

7. Werkzeugkopf (300) nach Anspruch einem der vorhergehenden Ansprüche,
wobei das werkzeugseitige erste Spindellager (323) eine erste Lagerebene (L1) senkrecht zur Werkzeugspindelachse (B) definiert,
wobei das werkzeugseitige zweite Spindellager (333) eine zweite Lagerebene (L2) senkrecht zur Werkzeugspindelachse (B) definiert,
wobei die erste Wuchteinrichtung (350) eine erste Wuchtebene (E1) senkrecht zur Werkzeugspindelachse (B) definiert,
wobei die zweite Wuchteinrichtung (360) eine zweite Wuchtebene (E2) senkrecht zur Werkzeugspindelachse (B) definiert, und
wobei die erste Wuchtebene (E1) zwischen der ersten Lagerebene (L1) und der zweiten Wuchtebene (E2) und/oder die zweite Wuchtebene (E2) zwischen der zweiten Lagerebene (L2) und der ersten Wuchtebene (E1) angeordnet ist.

8. Werkzeugkopf (300) nach einem der vorhergehenden Ansprüche, wobei die erste und/oder zweite Wuchteinrichtung (350, 360) als Ringwuchtsystem ausgebildet ist.

9. Werkzeugkopf (300) nach einem der vorhergehenden Ansprüche, wobei die erste und/oder zweite Wuchteinrichtung (350, 360) mindestens einen Aktor (352, 362) aufweist, um eine Korrekturunwucht (353, 363) der betreffenden Wuchteinrichtung (350, 360) NC-gesteuert zu verstellen.

10. Werkzeugkopf (300) nach einem der vorhergehenden Ansprüche,
aufweisend mindestens einen Schwingungssensor (351, 361) zur Erfassung von Schwingungen, die durch eine Unwucht im Werkzeugkopf (300) hervorgerufen werden,
wobei dem Werkzeugkopf (300) eine Steuereinrichtung (730) zugeordnet ist, die dazu ausgebildet ist, Signale von dem mindestens einen Schwingungssensor (351, 361) zu erfassen und Aktoren (352, 362) in der ersten und zweiten Wuchteinrichtung (350, 360) anzusteuern, um die erste und zweite Wuchteinrichtung (350, 360) in Abhängigkeit von den erfassten Signalen zu verstellen, derart, dass die Unwucht verringert wird,
wobei die Steuereinrichtung (730) bevorzugt dazu ausgebildet ist, ein automatisches Zwei-Ebenen-Wuchten durchzuführen.

11. Werkzeugkopf (300) nach einem der vorhergehenden Ansprüche,
wobei die erste Spindeleinheit (320) ein erstes Gehäuse (321) aufweist und die zweite Spindeleinheit (330) ein zweites Gehäuse (331) aufweist, und wobei die erste und/oder zweite Wuchteinrichtung (350, 360) ausserhalb des ersten und zweiten Gehäuses (321, 331) angeordnet ist, oder
wobei die ersten und zweiten Spindeleinheiten (320, 330) ein gemeinsames Spindelgehäuse (380) aufweisen, und wobei die erste und/oder zweite Wuchteinrichtung (350, 360) ausserhalb des gemeinsamen Spindelgehäuses (380) angeordnet ist.

12. Werkzeugkopf (300) nach Anspruch 11, wobei die erste und/oder zweite Wuchteinrichtung (350, 360) eine Aussenkontur aufweist, die sich in Richtung des Werkzeugs (340) verjüngt.

13. Werkzeugkopf (300) nach einem der vorhergehenden Ansprüche,
wobei die erste Spindeleinheit (320) einen ersten Antriebsmotor (324) aufweist, der dazu ausgebildet ist, die erste Spindelwelle (322) zu einer Drehung um die Werkzeugspindelachse (B) anzutreiben, und/oder
wobei die zweite Spindeleinheit (330) einen zweiten Antriebsmotor (334) aufweist, der dazu ausgebildet ist, die zweite Spindelwelle (332) zu einer Drehung um die Werkzeugspindelachse (B) anzutreiben.

14. Werkzeugkopf (300) nach einem der vorhergehenden Ansprüche, ausserdem aufweisend ein Werkzeug (340), insbesondere ein Schleifwerkzeug, bevorzugt ein Schleifwerkzeug zum Verzahnungsschleifen, das derart axial zwischen der ersten Spindelwelle (322) und der zweiten Spindelwelle (332) verspannt ist, dass zwischen der ersten Spindelwelle (322) und der zweiten Spindelwelle (332) eine axiale Druckkraft auf das Werkzeug (340) wirkt.

15. Werkzeugmaschine, aufweisend:
einen Werkzeugkopf (300) nach einem der vorhergehenden Ansprüche; und
mindestens eine Werkstückspindel (500), um ein Werkstück (510) zur Drehung um eine Werkstückachse (C1) anzutreiben,
wobei die Werkzeugmaschine vorzugsweise eine Verzahnmaschine ist, insbesondere eine Verzahnungsschleifmaschine.

## Claims

1. A tool head (300) for a machine tool, in particular for a gear cutting machine, comprising:
a first spindle unit (320) with a first spindle shaft (322) which is mounted in the first spindle unit (320) so as to be rotatable about a tool spindle axis (B);
a first balancing device (350) associated with the first spindle unit (320);
a second spindle unit (330) with a second spindle shaft (332) which is mounted in the second spindle unit (330) so as to be rotatable about the tool spindle axis (B); and
a second balancing device (360) associated with the second spindle unit (330),
wherein the first spindle unit (320) and the second spindle unit (330) are arranged coaxially with respect to each other in such a way that a tool (340) is receivable axially between the first spindle shaft (322) and the second spindle shaft (332),
**characterized**
**in that** the first balancing device (350) radially surrounds the first spindle shaft (322) and is arranged axially between a tool-side spindle bearing (323) of the first spindle unit (320) and a tool-side end of the first spindle shaft (322), and/or
**in that** the second balancing device (360) radially surrounds the second spindle shaft (332) and is arranged axially between a tool-side spindle bearing (333) of the second spindle unit (330) and a tool-side end of the second spindle shaft (332).

2. The tool head (300) of claim 1, wherein the tool (340) is clampable between the first spindle shaft (322) and the second spindle shaft (332) such that an axial compression force acts on the tool (340) between the first spindle shaft (322) and the second spindle shaft (332).

3. The tool head (300) of claim 2,
wherein the second spindle shaft (332) has at least one axial bore,
wherein the tool head (300) comprises at least one pull rod (370) extending through the axial bore of the second spindle shaft (332), the pull rod (370) being connectable at a first end to the first spindle shaft (322), and
wherein the pull rod (370) is connectable at a second end to the second spindle shaft (332) such that an axial compression force can be generated on the tool (340) between the first spindle shaft (322) and the second spindle shaft (332).

4. The tool head of claim 3, wherein the tool head (300) comprises a clamping element (372) connectable to the pull rod (370) at its second end and configured to axially push the second spindle shaft (332) toward the first spindle shaft (322),
wherein the clamping element preferably comprises:
a base element (373) rigidly connectable to the pull rod (370);
an axial push element (375) axially movable relative to the base element (373) in the direction of the second spindle shaft (332) to push the second spindle shaft (332) axially towards the first spindle shaft (322); and
at least one actuating element (376), the actuating element (376) being movable relative to the base element (373) to axially move the axial pressure member (375) relative to the base element (373).

5. The tool head (300) of any one of the preceding claims,
wherein a first spindle nose (325) is formed at the tool-side end of the first spindle shaft (322) in such a way that a non-positive and/or positive connection to the tool (340) can be produced at the first spindle nose (325) by means of an axial compression force, in particular a conical connection, preferably a conical connection with face contact, and
wherein a second spindle nose (335) is formed at the tool-side end of the second spindle shaft (332) in such a way that a non-positive and/or positive connection to the tool (340) can be produced at the second spindle nose (335) by an axial compression force, in particular a conical connection, preferably a conical connection with face contact.

6. The tool head (300) of claim 5,
wherein the first spindle nose (325) and the second spindle nose (335) are formed differently such that the tool (340) can only be received in a predetermined position between the spindle noses (325, 335).

7. The tool head (300) of claim any one of the preceding claims,
wherein the tool-side first spindle bearing (323) defines a first bearing plane (L1) perpendicular to the tool spindle axis (B),
wherein the tool-side second spindle bearing (333) defines a second bearing plane (L2) perpendicular to the tool spindle axis (B),
wherein the first balancing device (350) defines a first balancing plane (E1) perpendicular to the tool spindle axis (B),
the second balancing device (360) defining a second balancing plane (E2) perpendicular to the tool spindle axis (B), and
wherein the first balancing plane (E1) is arranged between the first bearing plane (L1) and the second balancing plane (E2) and/or the second balancing plane (E2) is arranged between the second bearing plane (L2) and the first balancing plane (E1).

8. The tool head (300) of any one of the preceding claims, wherein the first and/or second balancing device (350, 360) is configured as a ring balancing system.

9. The tool head (300) of any one of the preceding claims, wherein the first and/or second balancing device (350, 360) comprises at least one actuator (352, 362) for numerically controlled adjustment of a correction unbalance (353, 363) of the respective balancing device (350, 360).

10. The tool head (300) of any one of the preceding claims,
comprising at least one vibration sensor (351, 361) for detecting vibrations caused by an unbalance in the tool head (300),
wherein the tool head (300) has associated therewith a control device (730) which is configured to detect signals from the at least one vibration sensor (351, 361) and to control actuators (352, 362) in the first and second balancing devices (350, 360) in order to adjust the first and second balancing devices (350, 360) depending on the detected signals such that the unbalance is reduced,
wherein the control device (730) is preferably configured to perform automatic two-plane balancing.

11. The tool head (300) of any one of the preceding claims,
wherein the first spindle unit (320) comprises a first housing (321) and the second spindle unit (330) comprises a second housing (331), and wherein the first and/or second balancing device (350, 360) is arranged outside the first and second housings (321, 331), or
wherein the first and second spindle units (320, 330) comprise a common spindle housing (380), and wherein the first and/or second balancing device (350, 360) is arranged outside the common spindle housing (380).

12. The tool head (300) of claim 11, wherein the first and/or second balancing device (350, 360) has an outer contour that tapers towards the tool (340).

13. The tool head (300) of any one of the preceding claims,
wherein the first spindle unit (320) comprises a first drive motor (324) configured to drive the first spindle shaft (322) to rotate about the tool spindle axis (B), and/or
wherein the second spindle unit (330) comprises a second drive motor (334) configured to drive the second spindle shaft (332) to rotate about the tool spindle axis (B).

14. The tool head (300) of any one of the preceding claims, further comprising a tool (340), in particular a grinding tool, preferably a grinding tool for gear grinding, which is axially clamped between the first spindle shaft (322) and the second spindle shaft (332) such that an axial compression force acts on the tool (340) between the first spindle shaft (322) and the second spindle shaft (332).

15. A machine tool, comprising:
a tool head (300) of any one of the preceding claims; and
at least one workpiece spindle (500) for driving a workpiece (510) to rotate about a workpiece axis (C1),
wherein the machine tool is preferably a gear cutting machine, in particular a gear grinding machine.

## Revendications

1. Tête d'outil (300) pour une machine-outil, en particulier pour une machine à tailler les engrenages, présentant :
une première unité de broche (320) avec un premier arbre de broche (322), qui est logé dans la première unité de broche (320) de manière à pouvoir tourner autour d'un axe de broche d'outil (B) ;
un premier dispositif d'équilibrage (350) associé à la première unité de broche (320) ;
une deuxième unité de broche (330) comprenant un deuxième arbre de broche (332) qui est logé dans la deuxième unité de broche (330) de manière à pouvoir tourner autour de l'axe de broche d'outil (B) ; et
un deuxième dispositif d'équilibrage (360) associé à la deuxième unité de broche (330),
la première unité de broche (320) et la deuxième unité de broche (330) étant disposées coaxialement l'une par rapport à l'autre de telle sorte qu'un outil (340) puisse être reçu axialement entre le premier arbre de broche (322) et le deuxième arbre de broche (332),
**caractérisé**
**en ce que** le premier dispositif d'équilibrage (350) entoure radialement le premier arbre de broche (322) et est disposé axialement entre un palier de broche (323) côté outil de la première unité de broche (320) et une extrémité côté outil du premier arbre de broche (322), et/ou
**en ce que** le deuxième dispositif d'équilibrage (360) entoure radialement le deuxième arbre de broche (332) et est disposé axialement entre un palier de broche (333) côté outil de la deuxième unité de broche (330) et une extrémité côté outil du deuxième arbre de broche (332).

2. Tête d'outil (300) selon la revendication 1, dans laquelle l'outil (340) peut être serré entre le premier arbre de broche (322) et le deuxième arbre de broche (332) de telle sorte qu'une force de pression axiale agisse sur l'outil (340) entre le premier arbre de broche (322) et le deuxième arbre de broche (332).

3. Tête d'outil (300) selon la revendication 2,
dans lequel le deuxième arbre de broche (332) comporte au moins un alésage axial, dans lequel la tête d'outil (300) comprend au moins une barre de traction (370) s'étendant à travers l'alésage axial du deuxième arbre de broche (332), la barre de traction (370) pouvant être reliée à une première extrémité au premier arbre de broche (322), et
la barre de traction (370) pouvant être reliée à une deuxième extrémité au deuxième arbre de broche (332) de telle sorte qu'une force de pression axiale puisse être générée sur l'outil (340) entre le premier arbre de broche (322) et le deuxième arbre de broche (332).

4. Tête d'outil selon la revendication 3,
la tête d'outil (300) comprenant un élément de serrage (372) qui peut être connecté à la barre de traction (370) au niveau de sa deuxièmee extrémité et qui est conçu pour pousser le deuxième arbre de broche (332) axialement vers le premier arbre de broche (322),
l'élément de serrage comprenant de préférence :
un élément de base (373) qui peut être relié de manière rigide à la barre de traction (370) ;
un élément de pression axiale (375) mobile axialement par rapport à l'élément de base (373) en direction du deuxième arbre de broche (332) pour pousser le deuxième arbre de broche (332) axialement vers le premier arbre de broche (322) ; et
au moins un élément d'actionnement (376), l'élément d'actionnement (376) étant mobile par rapport à l'élément de base (373) pour déplacer axialement l'élément de pression axiale (375) par rapport à l'élément de base (373).

5. Tête d'outil (300) selon l'une quelconque des revendications précédentes,
un premier nez de broche (325) étant réalisé à l'extrémité côté outil du premier arbre de broche (322) de telle sorte qu'une liaison par adhérence et/ou par obstacle avec l'outil (340) puisse être réalisée sur le premier nez de broche (325) par une force de pression axiale, en particulier une liaison conique, de préférence une liaison conique avec appui plan, et
un deuxième nez de broche (335) étant réalisé à l'extrémité côté outil du deuxième arbre de broche (332) de telle sorte qu'une liaison par adhérence et/ou par obstacle avec l'outil (340) puisse être réalisée sur le deuxième nez de broche (335) par une force de pression axiale, en particulier une liaison conique, de préférence une liaison conique avec appui plan.

6. Tête d'outil (300) selon la revendication 5,
le premier nez de broche (325) et le deuxième nez de broche (335) étant formés différemment de telle sorte que l'outil (340) ne puisse être reçu entre les nez de broche (325, 335) que dans une position prédéterminée.

7. Tête d'outil (300) selon l'une quelconque des revendications précédentes,
le premier palier de broche (323) côté outil définissant un premier plan de palier (L1) perpendiculaire à l'axe de broche d'outil (B),
le deuxième palier de broche (333) côté outil définissant un deuxième plan de palier (L2) perpendiculaire à l'axe de broche d'outil (B),
le premier dispositif d'équilibrage (350) définissant un premier plan d'équilibrage (E1) perpendiculaire à l'axe de broche d'outil (B),
le deuxième dispositif d'équilibrage (360) définissant un deuxième plan d'équilibrage (E2) perpendiculaire à l'axe de broche d'outil (B), et
le premier plan d'équilibrage (E1) étant disposé entre le premier plan de palier (L1) et le deuxième plan d'équilibrage (E2) et/ou le deuxième plan d'équilibrage (E2) étant disposé entre le deuxième plan de palier (L2) et le premier plan d'équilibrage (E1).

8. Tête d'outil (300) selon l'une quelconque des revendications précédentes, dans laquelle le premier et/ou le deuxième dispositif d'équilibrage (350, 360) est conçu comme un système d'équilibrage annulaire.

9. Tête d'outil (300) selon l'une quelconque des revendications précédentes, dans laquelle le premier et/ou le deuxième dispositif d'équilibrage (350, 360) comporte au moins un actionneur (352, 362) pour déplacer un balourd de correction (353, 363) du dispositif d'équilibrage concerné (350, 360) par commande numérique.

10. Tête d'outil (300) selon l'une quelconque des revendications précédentes,
présentant au moins un capteur de vibrations (351, 361) pour détecter des vibrations qui sont provoquées par un balourd dans la tête d'outil (300),
un dispositif de commande (730) étant associé à la tête d'outil (300), lequel étant conçu pour détecter des signaux provenant du au moins un capteur de vibrations (351, 361) et pour commander des actionneurs (352, 362) dans le premier et le deuxième dispositif d'équilibrage (350, 360) afin de régler le premier et le deuxième dispositif d'équilibrage (350, 360) en fonction des signaux détectés, de telle sorte que le balourd soit réduit,
le dispositif de commande (730) étant de préférence conçu pour effectuer un équilibrage automatique à deux plans.

11. Tête d'outil (300) selon l'une quelconque des revendications précédentes,
la première unité de broche (320) comprenant un premier boîtier (321) et la deuxième unité de broche (330) comprenant un deuxième boîtier (331), le premier et/ou le deuxième dispositif d'équilibrage (350, 360) étant disposé à l'extérieur du premier et du deuxième boîtier (321, 331), ou
les première et deuxième unités de broche (320, 330) présentent un boîtier de broche commun (380), et le premier et/ou le deuxième dispositif d'équilibrage (350, 360) étant disposé à l'extérieur du boîtier de broche commun (380).

12. Tête d'outil (300) selon la revendication 11, dans laquelle le premier et/ou le deuxième dispositif d'équilibrage (350, 360) présente un contour extérieur qui se rétrécit en direction de l'outil (340).

13. Tête d'outil (300) selon l'une quelconque des revendications précédentes,
la première unité de broche (320) comprenant un premier moteur d'entraînement (324) conçu pour entraîner le premier arbre de broche (322) de manière à ce que celui-ci effectue une rotation autour de l'axe de broche d'outil (B), et/ou
la deuxième unité de broche (330) comprenant un deuxième moteur d'entraînement (334) conçu pour entraîner le deuxième arbre de broche (332) de manière à ce que celui-ci effectue une rotation autour de l'axe de broche d'outil (B).

14. Tête d'outil (300) selon l'une quelconque des revendications précédentes, présentant en outre un outil (340), en particulier un outil de rectification, de préférence un outil de rectification pour la rectification d'engrenages, qui est serré axialement entre le premier arbre de broche (322) et le deuxième arbre de broche (332) de telle sorte qu'une force de pression axiale agisse sur l'outil (340) entre le premier arbre de broche (322) et le deuxième arbre de broche (332).

15. Machine-outil, comprenant
une tête d'outil (300) selon l'une quelconque des revendications précédentes ; et
au moins une broche porte-pièce (500) pour entraîner une pièce (510) de manière à ce que celle-ci effectue une rotation autour d'un axe de pièce (C1),
la machine-outil étant de préférence une machine à tailler les engrenages, en particulier une machine à rectifier les engrenages.
